# EUROPÄISCHE PATENTANMELDUNG

(11) **EP 3 272 624 A2**
(43) Veröffentlichungstag der Anmeldung: **24.01.2018**
(21) Anmeldenummer: 17181419.7
(22) Anmeldetag: 14.07.2017
(51) Int. Cl.: B62D 5/06

(54) **HYDRAULIKAGGREGAT**

(30) Priorität: 20.07.2016 DE 102016113366
(71) Anmelder: Weber-Hydraulik GmbH, 74363 Güglingen (DE)
(72) Erfinder: Naumann, Ralf, 74397 Pfaffenhofen (DE); Dr. Winkler, Torsten, 74397 Pfaffenhofen (DE)
(74) Vertreter: Lemcke, Brommer & Partner Patentanwälte Partnerschaft mbB

(57) **Zusammenfassung**

Die Erfindung betrifft ein Hydraulikaggregat (1) zur Druckversorgung eines hydraulischen Lenksystems (20), insbesondere für Bau- oder Landmaschinen, mit einer Hydraulikpumpe (2) und einem elektrischen Antrieb. Wesentlich ist, dass der elektrische Antrieb redundant aufgebaut ist und zwei separat angesteuerte elektrische Antriebsmotoren (3a,3b) aufweist, die über die Hydraulikpumpe (2) mechanisch starr miteinander gekoppelt sind, und dass getrennte Steuerschaltungen (6a, 6b, 7a, 7b) vorgesehen sind, über die eine variable Lastverteilung auf die elektrischen Antriebsmotoren (3a,3b) vorgebbar ist.

## Beschreibung

Die vorliegende Erfindung betrifft ein Hydraulikaggregat zur Druckversorgung eines hydraulischen Lenksystems, insbesondere für Nutzkraftfahrzeuge, Bau- oder Landmaschinen, mit einer Hydraulikpumpe und einem elektrischen Antrieb.

Lenksysteme in Kraftfahrzeugen weisen heutzutage üblicherweise hydraulische Lenkkraftverstärker auf. Dazu werden in hydraulischen Lenksystemen hydraulische Lenkhilfepumpen zur Kraftunterstützung der Lenkbewegung eingesetzt.

Diese hydraulischen Lenkhilfepumpen werden üblicherweise durch den Verbrennungsmotor des Kraftfahrzeugs angetrieben. Im Zuge der zunehmenden Elektrifizierung von Fahrzeugen und Maßnahmen zur Energieeinsparung, z.B Start-Stopp-Funktionen, wird diese Aufgabe mehr und mehr von Elektromotoren übernommen. Damit ergeben sich immer höhere benötigte Ströme zur Bereitstellung der erforderlichen hydraulischen Leistungen und es steigen sowohl die Anforderungen als auch die Belastungen der entsprechenden Fahrzeugsysteme (wie z. B. Bordnetz und Akkumulatoren) zur Energieversorgung der Elektromotoren. Dies führt zu einer Erhöhung der Ausfallwahrscheinlichkeit der elektrohydraulischen Lenksysteme.

Bei den vorbekannten Lösungen aus dem Stand der Technik werden einerseits die mechanischen Leistungsgrenzen der Motoren erreicht. Darüber hinaus werden die Bordnetze zur Stromversorgung eines Fahrzeugs aufgrund der immer höheren benötigten Ströme zur Bereitstellung der erforderlichen hydraulischen Leistungen störanfälliger.

Eine Aufgabe der Erfindung besteht daher darin, ein Hydraulikaggregat mit einer erhöhten Ausfallsicherheit und einer kompakten Ausgestaltung vorzuschlagen.

Eine naheliegende Lösung zur Verbesserung der Verfügbarkeit und Reduzierung der Ausfallwahrscheinlichkeit hydraulischer Lenksysteme wäre, die Anzahl der Hydraulikaggregate zu verdoppeln und somit zwei Hydraulikaggregate einzusetzen.

Nachteilig an dieser naheliegenden Lösung ist jedoch, dass zum Einen der benötigte Bauraum verdoppelt wird und daher der Einbau nahe am Lenkgetriebe nahezu unmöglich wird. Darüber hinaus ist eine aufwendige Ventiltechnik zur Summierung der Leistung der Hydraulikaggregate notwendig. Diese zusätzlichen Hydraulikfunktionen erhöhen das Fehlerpotential des hydraulischen Lenksystems weiter.

Erfindungsgemäß wird die oben genannte Aufgabe daher gelöst durch ein Hydraulikaggregat mit den Merkmalen des Anspruchs 1, durch ein Verfahren mit den Merkmalen des Anspruchs 14 sowie durch ein Lenksystem mit den Merkmalen des Anspruchs 15. Vorteilhafte Ausgestaltungen finden sich in den abhängigen Ansprüchen. Hiermit wird der Wortlaut sämtlicher Ansprüche explizit per Referenz in die Beschreibung einbezogen.

Das erfindungsgemäße Hydraulikaggregat ist bevorzugt zur Durchführung des erfindungsgemäßen Verfahrens und/oder einer bevorzugten Ausführungsform hiervon ausgebildet. Das erfindungsgemäße Verfahren ist bevorzugt zur Durchführung mittels eines erfindungsgemäßen Hydraulikaggregats und/oder einer bevorzugten Ausführungsform hiervon ausgestaltet.

Das erfindungsgemäße Hydraulikaggregat ist zur Druckversorgung eines hydraulischen Lenksystems, insbesondere für Nutzkraftfahrzeuge, Bau- oder Landmaschinen ausgebildet und weist eine Hydraulikpumpe und einen elektrischen Antrieb auf.

Wesentlich ist, dass der elektrische Antrieb redundant aufgebaut ist und zwei separat angesteuerte elektrische Antriebsmotoren aufweist. Die Antriebsmotoren sind über die Hydraulikpumpe mechanisch starr miteinander gekoppelt. Die Hydraulikpumpe wird also mittels zweier separater Antriebsmotoren angetrieben. Dafür weisen beide Antriebsmotoren jeweils eine Steuerschaltung auf, die den gemeinsamen Betrieb der Antriebsmotoren mit einer variablen Lastverteilung für die beiden elektrischen Antriebsmotoren ermöglichen.

Die Steuerschaltungen können in die jeweiligen zu den Antriebsmotoren gehörigen Motorcontroller integriert sein oder als separate Bauelemente, d. h. als zusätzliche Steuerschaltungen ausgeführt sein.

Hierdurch ergeben sich insbesondere die Vorteile, dass durch den redundanten Aufbau mit zwei Antriebsmotoren die Ausfallsicherheit des Hydraulikaggregats erhöht wird, d. h. mit anderen Worten die Ausfallwahrscheinlichkeit des Hydraulikaggregats reduziert wird. Darüber hinaus kann durch die zwei Antriebsmotoren die Hydraulikleistung gesteigert werden. Trotzdem benötigt das Hydraulikaggregat lediglich einen vergleichsweise geringen Bauraum und kann so in einfacher Art und Weise nahe am Lenkgetriebe positioniert werden.

Durch die Ausgestaltung als eine Hydraulikpumpe mit zwei unabhängigen Antriebsmotoren kann der Einsatz aufwändiger Ventiltechniken, vermieden werden. Die zusätzliche Ventiltechnik bzw. andere konstruktive Bauelemente, die zum Aufsummieren der beiden hydraulischen Leistungen bei einem Einsatz von zwei Hydraulikpumpen erforderlich wären, können erfindungsgemäß vorteilhafterweise entfallen. Dies verringert die Störanfälligkeit des Hydraulikaggregats und reduziert den für das System in Summe benötigten Bauraum ebenfalls.

Aus der DE10 207 018 A1 ist eine Baueinheit mit einer Hydraulikpumpe bekannt, die in einen Elektromotor integriert ist und damit zwischen zwei Halbmotoren angeordnet ist. Nachteilig an dieser Baueinheit ist, dass eine gemeinsame Ansteuerung der beiden Halbmotoren erfolgt und daher nicht die genannten erfindungsgemäßen Vorteile erreicht werden.

Bei einer bevorzugten Ausführungsform der Erfindung ist für die elektrischen Antriebsmotoren jeweils ein Motorcontroller vorgesehen. Die Motorcontroller sind vorzugsweise zur Steuerung der elektrischen Antriebsmotoren ausgebildet. Bevorzugt sind die Motorcontroller jeweils mit einer Motorsteuerung und einer Ansteuerlogik als Steuerschaltung ausgebildet. Damit ist in Form der Ansteuerlogik als Teil der Motorcontroller vorzugsweise ein Prozessor vorhanden, der auch für Berechnungen oder Kontrollfunktionen des Lenksystems genutzt werden kann. Bei dieser Ausführungsform sind die Steuerschaltungen als Teil der Motorcontroller in die elektrischen Antriebsmotoren integriert.

Bei einer alternativen Ausführungsform der Erfindung sind die Motorcontroller lediglich jeweils mit einer einfachen Motorsteuerung ausgebildet. In diesem Fall sind zumindest zwei zusätzliche Steuerschaltungen vorgesehen, um den gemeinsamen Betrieb der Antriebsmotoren mit einer variablen Lastverteilung für die beiden elektrischen Antriebsmotoren zu steuern.

Bei einer bevorzugten Ausgestaltung der Erfindung ist die Hydraulikpumpe als Zahnradpumpe ausgebildet. Üblicherweise weist eine Zahnradpumpe ein zusammenarbeitendes Zahnradpaar auf. Die beiden Antriebsmotoren greifen bevorzugt an zumindest einem der Zahnrädern der Pumpe an. Vorzugsweise ist die Pumpe mit einem beidseitigen Antrieb ausgestaltet. Dabei können die beiden Antriebsmotoren jeweils auf der gleichen Pumpwelle angeordnet sein. Durch diese Anordnung kann in einfacher Art und Weise eine kompakte und bauraumsparende Ausgestaltung des Hydraulikaggregats erreicht werden.

Vorzugsweise ist die Hydraulikpumpe zwischen den beiden Antriebsmotoren angeordnet. Insbesondere bevorzugt sind die beiden Antriebsmotoren über eine gemeinsame Welle der Hydraulikpumpe mechanisch gekoppelt.

Alternativ können die beiden Antriebsmotoren an beiden Pumpwellen angreifen, insbesondere bevorzugt greift der eine Antriebsmotor an dem einen Zahnrad der Hydraulikpumpe an und der andere Antriebsmotor an dem anderen Zahnrad der Hydraulikpumpe. Die mechanische Kopplung erfolgt in diesem Fall über die Zahnräder der Zahnradpumpe.

In einer bevorzugten Ausführungsform der Erfindung sind die Antriebsmotoren als bürstenlose Elektromotoren ausgebildet. Diese Motoren sind typischerweise verschleißunanfällig und weisen vergleichsweise höhere Laufzeiten auf. Die Antriebsmotoren sind, wie bekannt, jeweils mit einem Rotor und einem Stator ausgebildet und umfassen jeweils einen Motorcontroller. Mittels des jeweiligen Motorcontrollers erfolgt die Drehzahlregelung der Antriebsmotoren.

Zur Vorgabe der variablen Lastverteilung auf die elektrischen Antriebsmotoren geben die beiden Steuerschaltungen Steuerbefehle an die Antriebsmotoren. Dabei geben die Steuerschaltungen die Drehzahl und die maximal zulässige Stromaufnahme für jeden Antriebsmotor vor. Üblicherweise sieht die Software eines typischen Motorcontrollers vor, dass die Drehzahl entsprechend der Vorgabe solange gehalten wird, bis der Maximalstrom erreicht wird. Danach wird nur die höchstmögliche Drehzahl eingestellt/erreicht, die mit dem Maximalstrom erreicht werden kann. Vorzugsweise wird durch den jeweiligen Motorcontroller eine Regelung zur Begrenzung des Maximalstromes eines jeden einzelnen Antriebsmotors überlagert.

Dies kann sowohl über die Ansteuerlogik als Teil der Leistungselektronik des Motorcontrollers oder über eine zusätzliche Steuerschaltung zur Steuerung der Antriebsmotoren erfolgen.

Um eine Rückmeldung über den Stand der Rotoren der beiden Antriebsmotoren zu erhalten, ist vorzugsweise an zumindest einem der Antriebsmotoren, bevorzugt an beiden Antriebsmotoren ein Drehwinkelgeber angeordnet. Mittels des Drehwinkelgebers kann der Drehwinkel des Rotors bestimmt werden, um so eine optimale Zusammenwirkung der beiden Antriebsmotoren zu gewährleisten. Vorzugsweise laufen die beiden Antriebsmotoren synchron. Die Drehzahlregelung für beide Motoren ist bevorzugt so optimiert, dass trotz mechanischer Kopplung der Wirkungsgrad der einzelnen Motoren nicht negativ beeinflusst wird. Vorzugsweise erfolgt dies über die Reglerarchitektur der Antriebsmotoren: Die Reglerarchitektur beider Antriebsmotoren ist so gestaltet, dass mittels Parametrisierung der Regler diese derart eingestellt werden können, dass die durch die Kopplung der Motoren kurzzeitig auftretenden Störungen innerhalb zulässiger Abweichungen liegen, fortbestehende Abweichungen der Drehzahl aber ausgeglichen werden.

Bei einer vorteilhaften Weiterbildung der Erfindung sind die Steuerschaltungen für die variable Lastverteilung derart ausgebildet, dass diese unter Nutzung der Informationen über den Betriebszustand der Antriebsmotoren und den Zustand der Energieversorgung die beispielsweise hinsichtlich Lebensdauer der Komponenten optimale Energieverteilung berechnen und jeweils zugeordnet den Motorcontrollern die Drehzahl- und Maximalstromvorgabe bereitstellen.

Bei einer bevorzugten Ausführungsform der Erfindung werden die beiden Antriebsmotoren so angesteuert, dass die Leistung jedes der beiden Antriebsmotoren jeweils die Hälfte der in Summe abzugebenden Leistung beträgt. Hierdurch ergibt sich der Vorteil, dass die in Summe bereitgestellte Leistung gezielt gesteuert werden kann.

In einer alternativen Ausführungsform werden die beiden Antriebsmotoren derart angesteuert, dass einer der beiden Antriebsmotoren bis zur Maximalleistung betrieben wird und bedarfsabhängig, vorzugsweise mittels der zentralen Master-Steuerschaltung, die darüber hinausgehende bereitzustellende Leistung von dem zweiten Antriebsmotor angefordert wird.

Diese Ausgestaltung ist insbesondere für eine Ausführungsform geeignet, bei der beide Antriebsmotoren verschiedene, unabhängige Stromversorgungen aufweisen. Wird beispielsweise einer der beiden Antriebsmotoren mit einer Stromversorgung aus einer bevorzugten Energiequelle betrieben, kann die Maximalleistung von diesem Motor angefordert werden. Ebenso kann in einer Situation, bei der beispielsweise einer der beiden Antriebsmotoren mit einer Stromversorgung aus einer Batterie mit geringerem Ladezustand angetrieben wird, von diesem Antriebsmotor nur die Differenzleistung angefordert werden. Es kann also vorteilhaft auf die jeweilige Stromversorgungssituation reagiert werden.

Insbesondere sind die Steuerschaltungen ausgebildet, sich gegenseitig auf Fehlfunktionen zu überwachen. Dabei erfolgt bevorzugt eine gegenseitige Überprüfung der Plausibilität der Befehle aller Steuerschaltungen.

Vorzugsweise wird im Falle einer erkannten Fehlfunktion durch die von der Fehlfunktion nicht betroffenen Steuerschaltungen die Leistung des zugehörigen elektrischen Antriebsmotors angepasst, insbesondere erhöht.

Hierdurch ergibt sich der Vorteil, dass im Falle einer Fehlfunktion die Aufgaben der einen Steuerschaltung von der durch die Fehlfunktion nicht betroffenen Steuerschaltung entweder übernommen werden können. Alternativ kann die durch die Fehlfunktion nicht betroffene Steuerschaltung den noch verbleibenden Antriebsmotor mit einer höheren Leistung betreiben, um die Fehlfunktion zu kompensieren. Dadurch wird die Ausfallwahrscheinlichkeit des Lenksystems weiter verringert.

Bei einer bevorzugten Ausführungsform der Erfindung ist vorgesehen, dass die Steuerschaltungen derart ausgebildet sind, dass eine der Steuerschaltungen als eine Master-Steuerschaltung arbeitet, welche Master-Steuerschaltung eine Lastverteilung für die elektrischen Antriebsmotoren vorgibt. Vorzugsweise arbeitet die andere Steuerschaltung als eine Slave-Steuerschaltung, wobei die Master-Steuerschaltung der Slave-Steuerschaltung eine Antriebsleistung für den von der Slave-Steuerschaltung gesteuerten elektrischen Antriebsmotor vorgibt.

Die Lastverteilung wird von der Master-Steuerschaltung vorzugsweise über eine entsprechende Drehzahlvorgabe gesteuert. Dabei erfolgt die variable Lastaufteilung bevorzugt dahingehend, dass der gemeinsame Wirkungsgrad der zwei Antriebsmotoren im Wesentlichen dem Wirkungsgrad der einzelnen Antriebsmotoren entspricht, d. h. dass es trotz der mechanischen Kopplung der Motoren zu keinen Leistungseinbußen kommt.

In einer bevorzugten Ausführungsform der Erfindung weist das Hydraulikaggregat eine dritte Steuerschaltung auf, wobei diese dritte Steuerschaltung als Master-Steuerschaltung arbeitet, beziehungsweise ausgebildet ist, als Master-Steuerschaltung zu arbeiten. Dabei werden von der dritten Steuerschaltung als Master-Steuerschaltung die beiden Steuerschaltungen der beiden Antriebsmotoren als Slave-Steuerschaltungen zentral mit der variablen Lastverteilung angesteuert.

Insbesondere durch den Einsatz von drei Steuerschaltungen kann ein sicherer Betrieb gewährleistet werden. Bei einem Ausfall oder einer Fehlfunktion einer

Steuerschaltung kann durch die verbleibenden zwei Steuerschaltungen weiterhin die volle Funktionalität realisiert werden und das Lenksystem damit bis zum Fahrzeugstillstand betrieben werden.

Vorzugsweise wird auch die dritte Steuerschaltung redundant ausgeführt, sodass zwei zusätzliche externe Steuerschaltungen, d. h. vorzugsweise insgesamt vier Steuerschaltungen vorgesehen sind. In diesem Fall können die Motorcontroller nur mit Überwachungs- bzw. Plausibilisierungsfunktionen ausgestattet sein.

Die zuvor beschriebene Aufgabe ist weiterhin gelöst durch ein Verfahren gemäß Anspruch 14.

Das erfindungsgemäße Verfahren zum Betrieb eines Hydraulikaggregats zur Druckversorgung eines hydraulischen Lenksystems wird vorzugsweise mit einem Hydraulikaggregat umfassend eine Hydraulikpumpe und einen elektrischen Antrieb durchgeführt.

Wesentlich ist, dass der elektrische Antrieb zwei separat angesteuerte elektrische Antriebsmotoren mit zumindest zwei getrennten Steuerschaltungen aufweist. Über die getrennten Steuerschaltungen erfolgt eine variable Lastverteilung auf die elektrischen Antriebsmotoren.

Das erfindungsgemäße Verfahren weist ebenfalls die vorgenannten Vorteile des erfindungsgemäßen Hydraulikaggregats auf.

Bei einer vorteilhaften Weiterbildung erfolgt die variable Lastverteilung auf die elektrischen Antriebsmotoren derart, dass diese unter Nutzung der Informationen über den Betriebszustand der Antriebsmotoren und den Zustand der Energieversorgung die beispielsweise hinsichtlich Lebensdauer und Zustand der Komponenten optimale Energieverteilung berechnen und jeweils zugeordnet den Motorcontrollern die Drehzahl- und Maximalstromvorgabe bereitstellen. Vorzugsweise erfolgt die variable Lastverteilung dahingehend, dass der gemeinsame Wirkungsgrad der beiden Antriebsmotoren im Wesentlichen dem Wirkungsgrad der einzelnen Antriebsmotoren entspricht.

Diese Art der Ansteuerung ist insbesondere bei einem Einsatz einer gemeinsamen Stromversorgung der beiden Antriebsmotoren vorteilhaft. Beide Motoren werden elektrisch, mechanisch und thermisch gleich belastet. Im Ergebnis ist die abgegebene Leistung dabei von der gemeinsamen Belastung der beiden Antriebsmotoren abhängig.

Vorzugsweise werden die beiden Antriebsmotoren jeweils drehzahlgeregelt entsprechend einer variablen Drehzahlvorgabe betrieben.

Alternativ kann eine Ansteuerung dahingehend erfolgen, dass die Leistung jedes der beiden Antriebsmotoren jeweils die Hälfte der in Summe abzugebenden Leistung beträgt. Dies ermöglicht eine gezielte Beeinflussung der in Summe bereitgestellten Leistung.

In einer weiteren alternativen Ausführungsform kann die variable Lastverteilung dahingehend erfolgen, dass einer der beiden Antriebsmotoren mit seiner Maximalleistung betrieben wird. Die Differenzleistung bis zu der bereitzustellenden Leistung wird von dem zweiten Antriebsmotor angefordert. Diese Art der Ansteuerung ist insbesondere geeignet, wenn die beiden Antriebsmotoren voneinander unabhängige, unterschiedliche Stromversorgungen aufweisen. Dann ist beispielsweise eine Differenzierung abhängig von der Art der Energiequelle möglich. Beispielsweise kann, abhängig vom Ladezustand einer Batterie, die Batterie mit geringem Ladezustand geschont werden, indem der zugehörige Antriebsmotor beispielsweise mit einer reduzierten Leistung betrieben wird. Alternativ kann aus einer bevorzugten Energiequelle der Antriebsmotor mit der höheren Leistung betrieben werden.

Die zuvor beschriebene Aufgabe wird weiterhin gelöst mittels eines Lenksystems mit einem erfindungsgemäßen Hydraulikaggregat. Dabei ist das erfindungsgemäße Hydraulikaggregat insbesondere für den Einsatz in einem Vorderachs- oder Hinterachslenksystem geeignet.

In einer bevorzugten Weiterbildung der Erfindung wird das Hydraulikaggregat über ein Kommunikationsnetzwerk, bevorzugt ein BUS-System angesteuert. Mittels des Kommunikationsnetzwerks ist eine Kommunikation der Steuerschaltungen untereinander möglich. Das Kommunikationsnetzwerk verbindet vorzugsweise die beiden Steuerschaltungen miteinander. Sind weitere zusätzliche Steuerschaltungen, beispielsweise als Master-Steuerschaltung vorgesehen, verbindet das Kommunikationsnetzwerk vorzugsweise die zusätzlichen Steuerschaltung mit den beiden Steuerschaltungen der Antriebsmotoren. Das Kommunikationsnetzwerk ist vorzugsweise Teil des Lenksystems.

Vorzugsweise erfolgt über das Kommunikationsnetzwerk auch die Kommunikation mit einer Stromversorgung für die beiden Antriebsmotoren. Hierzu ist vorzugsweise eine zentrale Steuerung der Stromversorgungen vorgesehen. Zur Verringerung der Ausfallwahrscheinlichkeit der Spannungsversorgung ist diese vorzugsweise ebenso redundant ausgeführt. Auch die Spannungsversorgung ist vorzugsweise Teil des Lenksystems. Zusätzlich ist optional eine Vorrichtung (battery surveillance) zur Überwachung des Ladezustandes der Akkumulatoren der Spannungsversorgungen (Ladezustandsüberwachung) vorgesehen, bevorzugt mit einer zusätzlichen Funktion zum Ausgleich der Ladungszustände (Balancer-Funktion).

Das erfindungsgemäße Hydraulikaggregat ist insbesondere für die Realisierung einer Verdrängersteuerung zum Betrieb von elektrohydraulischen Lenksystemen geeignet und ermöglicht hier eine Erhöhung der Verfügbarkeit und eine Verringerung der Ausfallwahrscheinlichkeit.

Weitere bevorzugte Merkmale und Ausführungsformen des erfindungsgemäßen Hydraulikaggregats sowie der erfindungsgemäßen Vorrichtung und des erfindungsgemäßen Lenksystems werden im Folgenden anhand von Ausführungsbeispiel und den Figuren erläutert. Dabei zeigt:
- Figur 1: eine schematische Darstellung eines ersten Ausführungsbeispiels eines erfindungsgemäßen Hydraulikaggregats mit Lenksystem;
- Figur 2: eine schematische Darstellung eines zweiten Ausführungsbeispiels eines erfindungsgemäßen Hydraulikaggregats mit zwei Varianten in den Teilabbildungen a) und b);
- Figur 3: eine schematische Darstellung eines dritten Ausführungsbeispiels eines erfindungsgemäßen Hydraulikaggregats;
- Figur 4: eine schematische Darstellung eines Ausführungsbeispiels eines erfindungsgemäßen Lenksystems.

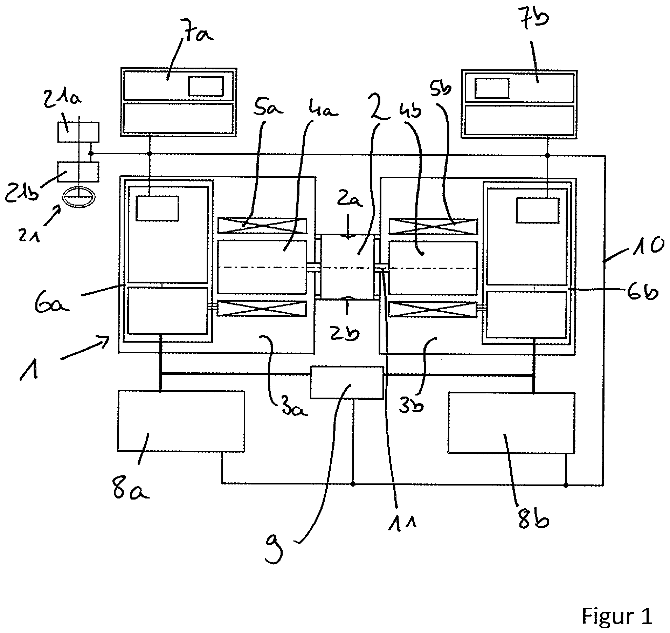

In den Figuren 1 bis 4 bezeichnen gleiche Bezugszeichen gleiche oder gleichwirkende Elemente.

Figur 1 zeigt eine schematische Darstellung eines ersten Ausführungsbeispiels eines erfindungsgemäßen Hydraulikaggregats.

Das Hydraulikaggregat 1 umfasst eine Hydraulikpumpe 2 und zwei Antriebsmotoren 3a, 3b. Die Antriebsmotoren 3a, 3b sind jeweils mit einem Rotor 4a, 4b und einem Stator 5a, 5b ausgebildet und umfassen jeweils einen Motorcontroller 6a, 6b. Vorliegend sind die beiden Antriebsmotoren 3a, 3b als bürstenlose Elektromotoren ausgebildet.

In redundanter Ausführung ist vorliegend zusätzlich für jeden der beiden Antriebsmotoren eine Steuerschaltung 7a, 7b vorgesehen.

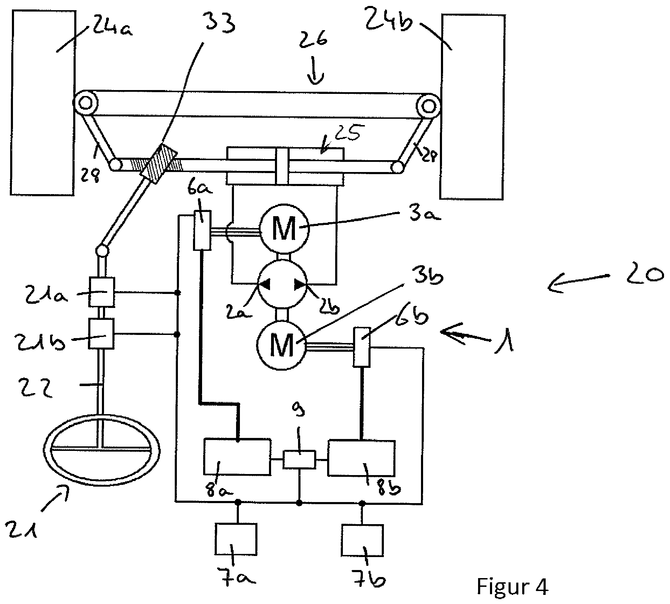

Die Hydraulikpumpe 2 ist als Zahnradpumpe mit einem beidseitigen Antrieb ausgebildet. Über die beiden Anschlüsse 2a, 2b gelangt die Hydraulikflüssigkeit zu dem Hydraulikzylinder 25, dargestellt in Figur 4. Die Hydraulikpumpe 2 ist zwischen den beiden Antriebsmotoren 3a, 3b angeordnet.

Das Hydraulikaggregat mit den beiden Antriebsmotoren 3a, 3b wird mit zwei Stromversorgungen 8a, 8b für die beiden Antriebsmotoren 2, 3 versorgt. Zusätzlich ist eine Vorrichtung (battery surveillance) 9 zur Überwachung des Ladezustandes der Akkumulatoren der Spannungsversorgungen (Ladezustandsüberwachung) vorliegend mit zusätzlicher Funktion zum Ausgleich der Ladungszustände (Balancer-Funktion) vorgesehen.

Ein Kommunikationsnetzwerk 10, welches vorliegend als BUS-System ausgebildet ist, verbindet die beiden Steuerschaltungen 7a, 7b mit den beiden Motorcontrollern 6a, 6b der Antriebsmotoren 3a, 3b und den beiden Stromversorgungen 8a, 8b und die Ladezustandsüberwachung 9.

Zusätzlich ist schematisch ein Lenkrad 21 dargestellt mit Sensoren 21a, 21b zur Erfassung des Einschlagwinkels des Lenkrades 21 und des am Lenkrad anliegenden Drehmomentes. Als Sensoren 21 a, 21 b können für Lenksysteme übliche Sensoren, verwendet werden. Die Sensoren 21 a, 21 b sind in das Kommunikationsnetzwerk 10 integriert. Dabei werden die Sensoren, wie speziell für Lenksysteme bekannt, redundant ausgeführt bzw. es werden zumindest die Signale redundant und bereits auf Plausibilität geprüft von den Sensoren bereitgestellt.

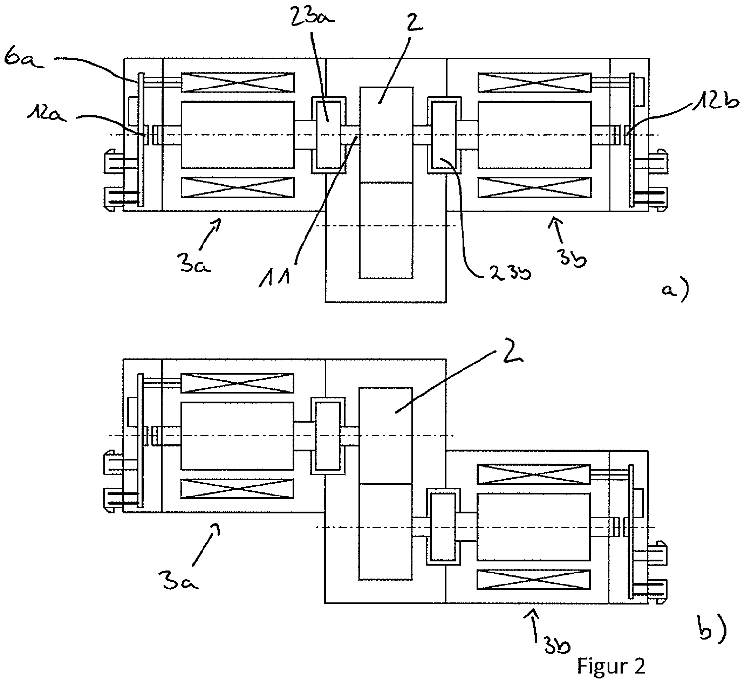

Die beiden Antriebsmotoren sind über die Hydraulikpumpe 2 mechanisch starr gekoppelt. Dazu sind die beiden Antriebsmotoren 3a, 3b vorliegend auf einer gemeinsamen Welle 11 mit der Hydraulikpumpe 1 angeordnet. Die beiden über Wellenkupplungen 23a und 23b zu der gemeinsamen Welle 11 mit der Hydraulikpumpe 2 verbunden, wie in Figur 2 dargestellt.

Alternativ kann der Antrieb der Pumpe über einer der Wellen der Antriebsmotoren direkt erfolgen.

Der elektrische Antrieb des Hydraulikaggregats ist mittels der beiden Antriebsmotoren 3a, 3b redundant aufgebaut. Die beiden Antriebsmotoren 3a, 3b können jeweils über die zugehörige Steuerschaltung 7a, 7b gesteuert werden. Dazu geben die beiden Steuerschaltungen 7a, 7b Steuerbefehle an die Motorcontroller 6a, 6b der Antriebsmotoren 3a, 3b. Die Leistungselektronik zur Steuerung der Antriebsmotoren 2, 3 befindet sich in den Motorcontrollern 6a, 6b. Die Steuerschaltungen 7a, 7b übernehmen redundant die Aufbereitung der Steuersignale (Drehzahl, Maximalstrom) abhängig von der Lenkanforderung, die durch die Sensoren 21 a und 21 b erfasst wurde.

Über die beiden Steuerschaltungen 7a, 7b erfolgt eine variable Lastverteilung auf die elektrischen Antriebsmotoren, um eine vorgegebene Leistung des Hydraulikaggregats zu erreichen. Die beiden Antriebsmotoren 3a, 3b können jeweils mittels der jeweils zugehörigen Steuerschaltung 7a, 7b gesteuert werden. Alternativ können die beiden Antriebsmotoren von der jeweils anderen Steuerschaltung gesteuert werden. Ebenso ist es möglich, dass beide Antriebsmotoren von einer der Steuerschaltungen 7a, 7b gesteuert werden.

Dabei geben die Steuerschaltungen die Drehzahl und die maximal zulässige Stromaufnahme für jeden Antriebsmotor vor. Zur Bestimmung dieser Parameter wird von den Steuerschaltungen der Betriebszustand der Antriebsmotoren und der Zustand der Energieversorgung erfasst und dann im Hinblick auf die Leistungsanforderung die hinsichtlich Lebensdauer und Zustand der Komponenten (Antriebsmotoren, Stromversorgung) optimale Energieverteilung berechnet. Diese wird dann in Form einer Drehzahl- und Maximalstromvorgabe jeweils an den zugeordnet Motorcontrollern übergeben.

Vorliegend arbeitet die Steuerschaltung 7a als Master-Steuerschaltung. Die Steuerschaltung 7b ist als Slave-Steuerschaltung arbeitend ausgebildet und überwacht bzw. überprüft die Vorgaben der Master-Steuerschaltung 7a auf Plausibilität. Um die von den beiden Steuerschaltungen 7a, 7b vorgegebenen Antriebsleistungen zu erreichen, regeln die Motorcontroller 6a, 6b die Antriebsmotoren 3a, 3b.

Bei einem Ausfall oder einer Fehlfunktion einer der beiden Antriebsmotoren 3a, 3b übernimmt der nicht von dem Ausfall oder der Fehlfunktion betroffene Antriebsmotor die Bereitstellung der benötigten hydraulischen Leistung bis zu dessen Leistungsmaximum. Die Steuerung erfolgt über die Steuerschaltungen 7a, 7b, die bei einem Ausfall einer der beiden Antriebsmotoren 3a, 3b die Leistungsanforderung (in Form von Drehzahl- und Maximalstromvorgabe) an den verbleibenden Antriebsmotor erhöhen.

Bei einem Ausfall oder einer Fehlfunktion einer der beiden Steuerschaltungen 7a, 7b übernimmt die nicht von dem Ausfall oder der Fehlfunktion betroffene Steuerschaltung die Steuerung der beiden Antriebsmotoren 3a,3b. Diese Ausfallsicherung greift damit sowohl bei einer Fehlfunktion einer der beiden Steuerungen als auch bei einer Fehlfunktion eines der beiden Antriebsmotoren.

Bei einer Lenkbewegung (üblicherweise eine Drehung des Lenkrades 21) erfassen die Sensoren 21a, 21b den Einschlagwinkel und das Drehmoment des Lenkrades 21. Diese Information wird über das Kommunikationsnetzwerk 10 an die Steuerschaltung 7a als Master-Steuerschaltung weitergegeben. Die Steuerschaltung 7a gibt dann entsprechende Steuerbefehle an die Motorcontroller 6a und 6b. Die Steuerschaltung 7b nimmt eine Plausibilitätsüberprüfung der Steuerbefehle der Steuerschaltung 7a vor.

Um die von der Master-Steuerschaltung 7a vorgegebenen Antriebsleistungen zu erreichen, regeln die Motorcontroller 6a, 6b die Antriebsmotoren 3a, 3b auf die vorgegebene Drehzahl unter Berücksichtigung des jeweiligen vorgegebenen Maximalstromes.

Bei einer Fehlfunktion oder einem Ausfall einer der beiden Steuerschaltungen 7a, 7b oder Antriebsmotor 3a, 3b werden die Aufgaben der einen Steuerschaltung 7a, 7b oder des einen Antriebsmotors 3a, 3b von der durch die Fehlfunktion nicht betroffenen Steuerschaltung 7a, 7b oder des nicht betroffenen Antriebsmotors 3a, 3b übernommen. Beispielsweise kann die durch die Fehlfunktion nicht betroffene Steuerschaltung 7a, 7b den noch verbleibenden Antriebsmotor 3a, 3b mit einer höheren Leistung betreiben, um die Fehlfunktion zu kompensieren.

Durch den redundanten Aufbau mit den beiden Antriebsmotoren 3a, 3b wird die Ausfallwahrscheinlichkeit des Hydraulikaggregats reduziert. Trotzdem benötigt das Hydraulikaggregat lediglich einen vergleichsweise geringen Bauraum und kann so in einfacher Art und Weise nahe am Lenkgetriebe positioniert werden. Um unnötige Wiederholungen zu vermeiden, soll im Folgenden lediglich auf die Unterschiede zwischen den Figuren eingegangen werden.

Figur 2 mit den Teilabbildungen 2a und 2b zeigt schematische Darstellungen zweier Varianten für die Anordnung der beiden Antriebsmotoren 3a, 3b relativ zueinander bzw. der Hydraulikpumpe 2.

Figur 2a zeigt eine erste Variante der Anordnungen der Antriebsmotoren 3a, 3b. Die Hydraulikpumpe 2 ist zwischen den beiden Antriebsmotoren 3a, 3b angeordnet. Dabei sind die beiden Antriebsmotoren 3a, 3b und die Hydraulikpumpe 2 auf einer gemeinsamen Welle 11 angeordnet und mechanisch starr gekoppelt. Dazu sind die beiden Antriebsmotoren 3a, 3b über Wellenkupplungen 23a und 23b zu einer gemeinsamen Welle 11 mit der Hydraulikpumpe 2 verbunden.

Figur 2b zeigt eine zweite Variante der Anordnungen der Antriebsmotoren 3a, 3b. Die Hydraulikpumpe 2 ist auch hier zwischen den Antriebsmotoren 3a, 3b angeordnet. Vorliegend ist jedoch der Antriebsmotor 3a mit einem ersten Pumpzahnrad der Hydraulikpumpe gekoppelt. Der Antriebsmotor 3b ist hingegen mit einem zweiten Zahnrad der Hydraulikpumpe gekoppelt. Die beiden Antriebsmotoren 3a, 3b sind also nicht auf einer gemeinsamen Welle angeordnet. Die Kopplung erfolgt über die Zahnräder der Hydraulikpumpe 2.

Abhängig von dem verfügbaren Bauraum, in dem das Hydraulikaggregat platziert werden soll, kann eine der beiden oben beschriebenen Varianten ausgewählt werden.

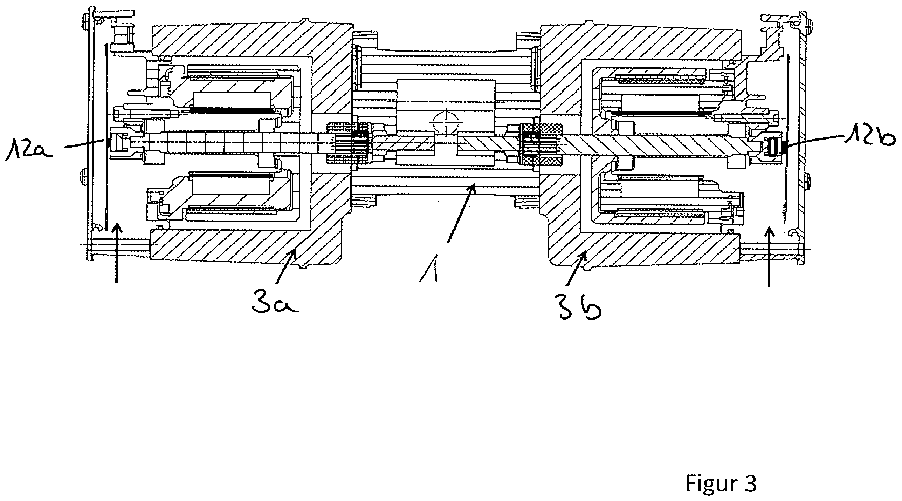

Figur 3 zeigt eine schematische Darstellung eines Ausschnitts eines erfindungsgemäßen Hydraulikaggregats.

Die beiden Antriebsmotoren 3a, 3b sind mit der Hydraulikpumpe 2 auf einer gemeinsamen Welle angeordnet. Die Hydraulikpumpe 2 ist zwischen den beiden Antriebsmotoren 3a, 3b angeordnet. An den beiden Antriebsmotoren 3a, 3b ist jeweils ein Drehwinkelgeber 12a, 12b angeordnet.

Mittels der Drehwinkelgeber 12a, 12b lässt sich der jeweilige Stand des Rotors bestimmen. Dies ermöglicht, ein optimales Zusammenwirken der beiden Antriebsmotoren zu steuern. Um eine maximale Hydraulikleistung zu erreichen, laufen die beiden Antriebsmotoren synchron. Die Reglerarchitektur beider Antriebsmotoren 3a, 3b ist dabei so gestaltet, dass mittels Parametrisierung eine Anpassung der Regler an unterschiedliche Betriebszustände möglich ist und diese derart eingestellt werden können, dass auch die durch die Kopplung der Antriebsmotoren 3a, 3b auftretenden Störungen ausgeglichen werden können.

Figur 4 zeigt eine schematische Darstellung eines ersten Ausführungsbeispiels eines erfindungsgemäßen Lenksystems 21. Das Lenksystem 21 ist vorliegend verdrängergesteuert, wie aus dem Stand der Technik bekannt, ausgebildet. Das Lenksystem 21 umfasst ein Lenkrad 20, eine Lenksäule 22, Sensoren 21a, 21b zur Erfassung des Einschlagwinkels des Lenkrades 21, ein Hydraulikaggregat 1, ein mechanisches Lenkgetriebe 33 und einen Lenkzylinder 25 zur Lenkkraftunterstützung in Wirkverbindung mit dem Hydraulikaggregat 1.

Lenkgetriebe 33 und Lenkzylinder 25 sind zusammenwirkend an der Spurstange 28 in Verbindung mit den Lenkhebeln 27 und der Vorderachse 26 angeordnet.

Das Hydraulikaggregat 1 ist vorliegend als erfindungsgemäßes Hydraulikaggregat 1 mit zwei Antriebsmotoren 3a, 3b und einer Hydraulikpumpe 2 ausgebildet. Über die beiden Anschlüsse 2a, 2b gelangt die Hydraulikflüssigkeit zu dem Hydraulikzylinder 25. Das Hydraulikaggregat 1 ist wie zu den Figuren 1 und 3 beschrieben ausgebildet.

Bei einer Lenkbewegung wird die Drehbewegung des Lenkrads 21 mittels der Sensoren 21a, 21b erfasst und über die Lenksäule 22 auf das mechanische Lenkgetriebe 33 übertragen. Die Information der Sensoren 21 a, 21 b wird über das Kommunikationsnetzwerk 10 an die Steuerschaltung 7a, 7b des Hydraulikaggregats 1 übertragen.

Das Hydraulikaggregat 1 arbeitet wie zu Figur 1 beschrieben. Durch das Hydraulikaggregat erfolgt über den Lenkzylinder 25 eine Unterstützung der Lenkkraft, die über die Lenkhebel 27 und die Vorderachse 26 auf die Räder 24a, 24b wirkt.

## Patentansprüche

1. Hydraulikaggregat (1) zur Druckversorgung eines hydraulischen Lenksystems, insbesondere für Nutzkraftfahrzeuge, Bau- oder Landmaschinen, mit einer Hydraulikpumpe (2) und einem elektrischen Antrieb,
**dadurch gekennzeichnet,**
**dass** der elektrische Antrieb redundant aufgebaut ist und zwei separat angesteuerte elektrische Antriebsmotoren (3a,3b) aufweist, die über die Hydraulikpumpe (2) mechanisch starr miteinander gekoppelt sind, und dass getrennte Steuerschaltungen (6a, 6b, 7a, 7b) vorgesehen sind, über die eine variable Lastverteilung auf die elektrischen Antriebsmotoren (3a,3b) vorgebbar ist.

2. Hydraulikaggregat (1) nach Anspruch 1 oder 2,
**dadurch gekennzeichnet,**
**dass** die elektrischen Antriebsmotoren (3a,3b) jeweils Motorcontroller (6a, 6b) umfassen, welche Motorcontroller (6a, 6b) zur Steuerung der elektrischen Antriebsmotoren (3a,3b) ausgebildet sind.

3. Hydraulikaggregat (1) nach Anspruch 1 oder 2,
**dadurch gekennzeichnet,**
**dass** die Steuerschaltungen (7a, 7b) jeweils in die Motorcontroller (6a, 6b) integriert sind, vorzugsweise dass die Motorcontroller (6a, 6b) jeweils mit einer Motorsteuerung und einer Ansteuerlogik als Steuerschaltung (7a, 7b) ausgebildet sind.

4. Hydraulikaggregat (1) nach einem der vorangegangenen Ansprüche,
**dadurch gekennzeichnet,**
**dass** die Steuerschaltungen (6a, 6b, 7a, 7b) ausgebildet sind, sich gegenseitig auf Fehlfunktionen zu überwachen, insbesondere dass im Falle einer erkannten Fehlfunktion die von der Fehlfunktion nicht betroffene Steuerschaltung (6a, 6b, 7a, 7b) eine Leistung des von ihr angesteuerten elektrischen Antriebsmotors (3a,3b) anpasst, insbesondere erhöht.

5. Hydraulikaggregat (1) nach einem der vorangegangenen Ansprüche,
**dadurch gekennzeichnet,**
**dass** die Steuerschaltungen (6a, 6b, 7a, 7b) derart ausgebildet sind, dass eine der Steuerschaltungen (6a, 6b, 7a, 7b) als Master-Steuerschaltung arbeitet, welche eine Lastverteilung für die elektrischen Antriebsmotoren (3a, 3b) vorgibt und insbesondere der anderen, als Slave-Steuerschaltung arbeitenden Steuerschaltung (6a, 6b, 7a, 7b), eine Antriebsleistung für den von ihr gesteuerten elektrischen Antriebsmotor (3a, 3b) vorgibt, wobei die Steuerschaltungen (6a, 6b, 7a, 7b) vorzugsweise ausgebildet sind, eine Master- und Slave-Zuordnung untereinander auszuhandeln.

6. Hydraulikaggregat (1) nach einem der vorangegangenen Ansprüche,
**dadurch gekennzeichnet,**
**dass** das Hydraulikaggregat (1) mit einer zusätzlichen Steuerschaltung als Master-Steuerschaltung ausgebildet ist, zur Steuerung der elektrischen Antriebsmotoren (3a,3b) über den jeweiligen Motorcontroller (6a, 6b).

7. Hydraulikaggregat (1) nach einem der vorangegangenen Ansprüche,
**dadurch gekennzeichnet,**
**dass** ein Kommunikationsnetzwerk (11), vorzugsweise ein BUS-System, für die Kommunikation zumindest der Steuerschaltungen (6a, 6b, 7a, 7b) untereinander vorgesehen ist.

8. Hydraulikaggregat (1) nach einem der vorangegangenen Ansprüche,
**dadurch gekennzeichnet,**
**dass** die Hydraulikpumpe (2) als Zahnradpumpe, vorzugsweise mit einem beidseitigen Antrieb, ausgebildet ist.

9. Hydraulikaggregat (1) nach einem der vorangegangenen Ansprüche,
**dadurch gekennzeichnet,**
**dass** die zwei Antriebsmotoren (3a, 3b) über eine gemeinsame Welle mechanisch gekoppelt sind, vorzugsweise dass die zwei Antriebsmotoren (3a, 3b) und die Hydraulikpumpe (2) auf einer gemeinsamen Welle (11) angeordnet sind, insbesondere bevorzugt dass die Hydraulikpumpe(2) zwischen den zwei Antriebsmotoren (3a, 3b) angeordnet ist.

10. Hydraulikaggregat (1) nach einem der vorangegangenen Ansprüche,
**dadurch gekennzeichnet,**
**dass** die zwei Antriebsmotoren (3a, 3b) über die Hydraulikpumpe (2), vorzugsweise mittels der Pumpzahnräder der Hydraulikpumpe (2), mechanisch gekoppelt sind, insbesondere bevorzugt dass jeweils ein Rotor (4a, 4b) der zwei Antriebsmotoren (3a, 3b) auf einer gemeinsamen Welle (11) mit zumindest einem Pumpzahnrad der Hydraulikpumpe (2) angeordnet ist.

11. Hydraulikaggregat (1) nach einem der vorangegangenen Ansprüche,
**dadurch gekennzeichnet,**
**dass** die zumindest zwei Antriebsmotoren (3a, 3b) als bürstenlose Elektromotoren ausgebildet sind, wobei vorzugsweise an einem der zwei Antriebsmotoren (3a, 3b), höchstvorzugsweise an beiden Antriebsmotoren (3a, 3b) ein Drehwinkelgeber (12a, 12b) vorgesehen ist.

12. Hydraulikaggregat (1) nach einem der vorangegangenen Ansprüche,
**dadurch gekennzeichnet,**
**dass** eine gemeinsame Motorkühlung für die zumindest zwei Antriebsmotoren (3a, 3b) mittels einer Hydraulikflüssigkeit der Hydraulikpumpe (2) vorgesehen ist.

13. Hydraulikaggregat (1) nach einem der vorangegangenen Ansprüche,
**dadurch gekennzeichnet,**
**dass** das Hydraulikaggregat (1) für ein Vorderachs- und/oder HinterachsLenksystem (20) ausgebildet ist.

14. Verfahren zum Betrieb eines Hydraulikaggregats (1) zur Druckversorgung eines hydraulischen Lenksystems (20) mit einer Hydraulikpumpe (2) und einem elektrischen Antrieb,
**dadurch gekennzeichnet,**
**dass** der elektrische Antrieb zwei separat angesteuerte elektrische Antriebsmotoren (3a, 3b) mit getrennten Steuerschaltungen (6a, 6b, 7a, 7b) aufweist und über die Steuerschaltungen (6a, 6b, 7a, 7b) eine variable Lastverteilung auf die elektrischen Antriebsmotoren (3a, 3b) erfolgt.

15. Lenksystem (20) mit einem Hydraulikaggregat (1) nach einem der Ansprüche 1 bis 13.
